# EUROPEAN PATENT APPLICATION

(11) **EP 4 773 359 A1**
(43) Date of publication of application: **08.07.2026**
(21) Application number: 25217795.1
(22) Date of filing: 21.11.2025
(51) Int. Cl.: H01M 50/107, H01M 50/152, H01M 50/167, H01M 50/186, H01M 50/342

(54) **SECONDARY BATTERY**

(30) Priority: 06.01.2025 KR 20250001544
(71) Applicant: SAMSUNG SDI CO., LTD., Yongin-si, Gyeonggi-do 17084 (KR)
(72) Inventor: DOO, Jaegyun, 17084 Yongin-Si (KR); KIM, Gwijae, 17084 Yongin-Si (KR); BAK, Hyo-Rim, 17084 Yongin-Si (KR); JUNG, Meenkyoung, 17084 Yongin-Si (KR); OH, Jungyeon, 17084 Yongin-Si (KR); PARK, Seung-Young, 17084 Yongin-Si (KR)
(74) Representative: Maiwald GmbH

(57) **Abstract**

A secondary battery includes a can including a bottom portion and a side portion extending from the bottom portion, an electrode assembly accommodated in the can, a cap assembly coupled to the side portion, and a gasket interposed between the side portion and the cap assembly. The side portion includes a beading portion bent inward between the cap assembly and the electrode assembly, and a crimping portion bent inward at an opening-side end of the side portion. A thickness of an upper region of the side portion above the beading portion is less than a thickness of a lower region of the side portion below the beading portion. The thickness of the upper region of the side portion above the beading portion is less than a thickness of the beading portion.

## Description

### Background

### Field

The present disclosure relates to a secondary battery, in particular a battery module including the secondary battery, and a battery pack including the secondary battery.

### Description of Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

PPR (Passive Propagation Resistance) refers to a physical or chemical property that suppresses or delays the spread of thermal runaway in the secondary battery. Thermal runaway is a phenomenon in which a thermal or electrical anomaly occurring in one cell is transmitted to an adjacent cell, potentially leading to a large-scale explosion or fire. As such, the potential for thermal runaway makes a battery module or battery pack that includes a plurality of cells less safe. And PPR is a characteristic of a battery system or a material designed to suppress thermal runaway and may be necessary to make a large battery system such as an electric vehicle or an ESS (Energy Storage System) more safe.

The above information disclosed in this Background section is for enhancement of understanding of the background of the present disclosure, and therefore, it may contain information that does not constitute related (or prior) art.

### SUMMARY

The present disclosure is directed to providing a secondary battery, a battery module including the secondary battery, and a battery pack including the secondary battery, in order to solve the above-described problems.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

According to an aspect, a secondary battery may include a can including a bottom portion and a side portion extending from the bottom portion, an electrode assembly accommodated in the can, a cap assembly coupled to the side portion, and a gasket interposed between the side portion and the cap assembly. The side portion may include (i) a beading portion bent inward between the cap assembly and the electrode assembly and (ii) a crimping portion bent inward at an open end of the side portion. A thickness of an upper region of the side portion above the beading portion may be less than a thickness of a lower region of the side portion below the beading portion. The thickness of the upper region of the side portion above the beading portion may be less than a thickness of the beading portion.

In some embodiments, the thickness of the upper region of the side portion may be constant.

In some embodiments, the thickness of the upper region of the side portion may decrease from the beading portion toward the open end of the side portion.

In some embodiments, the thickness of the beading portion may be less than the thickness of the lower region of the side portion.

In some embodiments, the side portion may further include a connecting portion connecting the beading portion and the crimping portion, and a thickness of the crimping portion may be less than a thickness of the connecting portion.

In some embodiments, a boundary between the crimping portion and the connecting portion may be positioned above the gasket.

In some embodiments, a boundary between the crimping portion and the connecting portion may be positioned lateral of the gasket.

In some embodiments, the thickness of the connecting portion decreases from a boundary of the connecting portion with the beading portion toward a boundary of the connecting portion with the crimping portion.

In some embodiments, the thickness of the beading portion ec toward a boundary between the beading portion and the connecting portion.

In some embodiments, the thickness of the crimping portion decreases from a boundary between the crimping portion and the connecting portion toward the open end of the side portion.

In some embodiments, a ratio of the thickness of the upper region of the side portion to the thickness of the lower region of the side portion may be 0.3-0.8.

In some embodiments, a length at which the crimping portion is bent inward of the can is less than a length that the beading portion is bent inward.

In some embodiments, the gasket may be in contact with at least a portion of the beading portion, the gasket may be in contact with at least a portion of the upper region of the side portion, and the gasket may be press-fitted between the cap assembly and the side portion.

In some embodiments, the cap assembly may include an upper cap disposed inside the crimping portion, a vent portion disposed below the upper cap, and a lower cap disposed below the vent portion and electrically connected to the electrode assembly.

In some embodiments, the electrode assembly may include a first electrode, a second electrode, and a separator interposed between the first electrode and the second electrode. The lower cap may be connected to a first electrode tab extending from a first side of the first electrode, and the bottom portion may be connected to a second electrode tab extending from a second side of the second electrode.

In some embodiments, a battery module may include a plurality of secondary batteries electrically connected and arranged in a horizontal direction, and a housing accommodating the plurality of secondary batteries. Each of the secondary batteries may include a can including a bottom portion and a side portion extending from the bottom portion, an electrode assembly accommodated in the can, a cap assembly coupled to the side portion, and a gasket interposed between the side portion and the cap assembly. The side portion may include a beading portion bent inward between the cap assembly and the electrode assembly, and a crimping portion bent inward at an open end of the side portion. A thickness of an upper region of the side portion above the beading portion may be less than a thickness of a lower region of the side portion below the beading portion, and the thickness of the upper region of the side portion above the beading portion may be less than a thickness of the beading portion.

In some embodiments, the thickness of the upper region of the side portion may decrease from the beading portion toward the open end of the side portion.

In some embodiments, the side portion may further include a connecting portion connecting the beading portion and the crimping portion, and a thickness of the crimping portion may be less than a thickness of the connecting portion.

In some embodiments, the crimping portion may have a decreasing thickness from a boundary between the crimping portion and the connecting portion toward the open end of the side portion.

In some embodiments, a battery pack may include at least one battery module.

According to some embodiments of the present disclosure, by configuring the thickness of an upper region of a side portion, located above a beading portion, to be smaller than the thickness of a lower region of the side portion, located below the beading portion, and the thickness of the upper region of the side portion, located above the beading portion, to be smaller than the thickness of the beading portion, it may be possible to reduce the likelihood that the side surface of a can will tear or be created with a pinhole when an event such as thermal runaway occurs in the secondary battery.

According to embodiments of the present disclosure, by configuring the thickness of an upper region of a side portion above a beading portion to be less than the thickness of a lower region of the side portion below the beading portion and the thickness of the upper region of the side portion above the beading portion to be less than the thickness of the beading portion, it is possible to form a flow path for discharging an oxidizing substance from inside the secondary battery toward an opening of the battery can when an event such as thermal runaway occurs in the secondary battery.

According to embodiments of the present disclosure, by configuring the thickness of an upper region of a side portion above a beading portion to be less than the thickness of a lower region of the side portion below the beading portion and the thickness of the upper region of the side portion above the beading portion to be less than the thickness of the beading portion, it is possible to design the can and a cap assembly such that uncrimping or unbending of the beading portion is facilitated. Consequently, when an event such as thermal runaway occurs in the secondary battery, the rupture pressure toward the opening or bottom portion of the can may be lower than the rupture pressure of the side surface of the can.

According to embodiments of the present disclosure, by configuring the thickness of an upper region of a side portion above a beading portion to be less than the thickness of a lower region of the side portion below the beading portion and the thickness of the upper region of the side portion above the beading portion to be less than the thickness of the beading portion, it is possible to reduce the likelihood that thermal runaway will lead to a larger fire in a battery module in which a plurality of secondary batteries are electrically connected and arranged horizontally.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to the present specification illustrate embodiments of the present disclosure, and further describe aspects and features of the present disclosure together with the detailed description of the present disclosure. Thus, the present disclosure should not be construed as being limited to the drawings:
FIG. 1 illustrates a thermal runaway propagation evaluation method of a battery module or a battery pack.
FIG. 2 illustrates a triggered cell of a battery module whose thermal runaway propagation evaluation result is no good.
FIG. 3 is a cross-sectional view illustrating a secondary battery according to an embodiment of the present disclosure.
FIG. 4 is a first example of an enlarged view of region R in FIG. 3.
FIG. 5 is a second example of an enlarged view of region R in FIG. 3.
FIG. 6 is a third example of an enlarged view of region R in FIG. 3.
FIG. 7 is a fourth example of an enlarged view of region R in FIG. 3.
FIG. 8 is a fifth example of an enlarged view of region R in FIG. 3.
FIG. 9 is a sixth example of an enlarged view of region R in FIG. 3.
FIG. 10 is a perspective view illustrating a battery module according to an embodiment of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with any requirements.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terms used in this specification are for describing embodiments of the present disclosure and are not intended to limit the present disclosure.

In the present disclosure, layers and regions shown in the figures may be exaggerated in size and relative dimensions for clarity of description. That is, the dimensions shown in the figures are merely for convenience of and the present disclosure is not limited thereto. In addition, the same reference numerals throughout the specification refer to the same features.

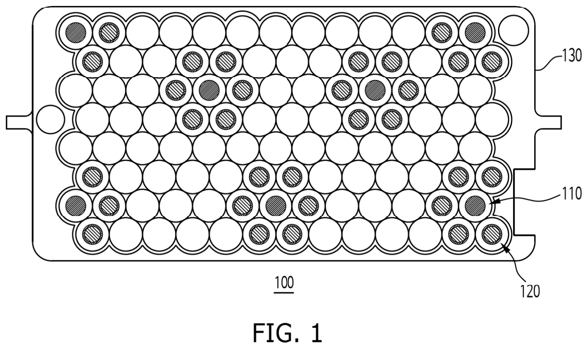

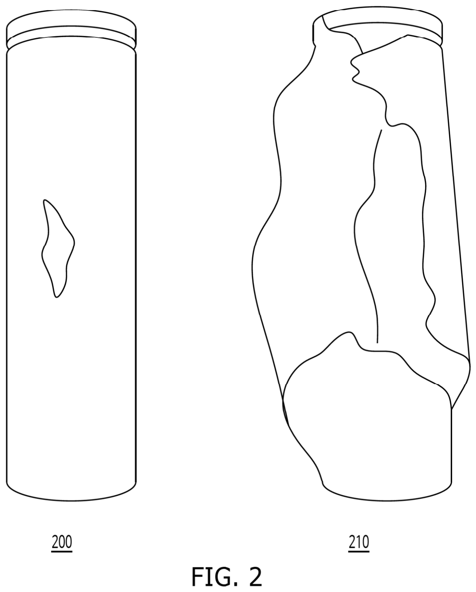

FIG. 1 illustrates a thermal runaway propagation evaluation method of a battery module or a battery pack. FIG. 2 is a view showing a triggered cell of a battery module whose thermal runaway propagation evaluation result is NG.

A battery module 100 or a battery pack including the same may include a plurality of battery cells, electrical connection components, a battery management system (BMS), a mechanical protection structure, a thermal management system, an insulator, a shock absorber, and an interface, and other structures.

A battery cell is the basic unit of the battery module 100 and is a secondary battery that stores and releases energy. Cells are connected in series or in parallel so that voltage and capacity can be adjusted.

The electrical connection components of the battery module 100 may include a bus bar, which is a metal conductor that provides electrical connections between cells, a wire harness that exchanges current and signals with the battery management system, and a fuse that protects the battery module 100 by interrupting a circuit when overcurrent occurs.

The battery management system (BMS) is a device that monitors and manages voltage, temperature, and charge/discharge state of the cells within the battery module 100. The BMS thereby balancing discrepancies between cells and ensuring safety.

The mechanical protection structure physically protects the cells from external impact, vibration, pressure, and the like, and may be made of aluminum, steel, or high-strength plastic. For example, the mechanical protection structure may include a housing 130 in which a plurality of cells are mounted and fixed. With the housing 130, structural rigidity of the battery module 100 can be secured.

The thermal management system controls heat generation of the cells and maintains a constant temperature by using, for example, liquid cooling or air cooling. The insulator may be arranged between cells to prevent a short circuit between the cells. In addition, a shock absorber may be arranged between cells or between a cell and the housing to absorb external impacts. The interface may refer to a port or a terminal that connects the battery module 100 to an external system (for example, a battery pack or a vehicle electrical system).

FIG. 1 is a top plan view of a plurality of battery cells mounted and/or fixed within the housing 130. Referring to FIG. 1, a triggered cell 110 is a cell that can cause thermal runaway, and an adjacent cell 120 refers to a cell adjacent to the triggered cell 110. When thermal runaway occurs in the triggered cell 110, reaction gas, electrolyte, electrode, and/or components may be rapidly discharged through an opening of a can forming an exterior material of the cell or through a vent portion located at a bottom of the can. For example, when the battery cell is a cylindrical secondary battery, an opening in the can may be located at the top of the battery module 100 and a vent portion at the bottom of the can may be located at the bottom of the battery module 100. In the event of a thermal runaway, it is desirable for pressure and/or heat to concentrate at the top or bottom of the can so that the top or bottom of the can ruptures, thereby preventing damage to the side surface of the adjacent cell 120.

However, in an abnormal thermal runaway, there may be a problem that the contents are discharged or ruptured through the side surface of the can rather than the top or bottom due to environment or characteristics of the cell. In such a case, as illustrated in FIG. 1, a plurality of adjacent cells 120 may be affected in chain reaction, possibly leading to a larger fire. As illustrated in FIG. 2, the side surface of the can may be torn by an explosion or partially melted to form a pinhole.

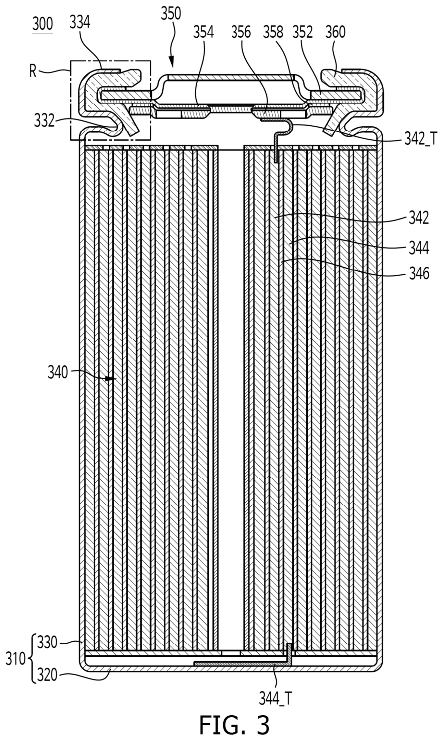

Upon checking the side surfaces 200, 210 of adjacent cells in a simplified cylindrical battery module whose thermal runaway propagation PPR evaluation result is NG (No Good), it can be confirmed that pinholes are formed in the side surfaces of the can or that the side surfaces were torn by an explosion. The simplified cylindrical battery module may include only the triggered cell 110 and the adjacent cell 120 (as shown in FIG. 1) and may be a unit module to predict an actual battery module environment. In the present disclosure, a battery can structure that prevents flame or discharge of contents through the side surface of the can will be described below with reference to FIGS. 3 to 9.

FIG. 3 is a cross-sectional view of a secondary battery according to an embodiment of the present disclosure. An example is given below in which a secondary battery 300 is a cylindrical secondary battery, but the present disclosure is not limited to a cylindrical secondary battery. The present disclosure includes secondary batteries having other external shapes, such as prismatic type batteries.

As illustrated, the secondary battery 300 according to an embodiment of the present disclosure may include a can 310, an electrode assembly 340 accommodated inside the can 310, an electrolyte, a cap assembly 350 coupled to the can 310 to seal an opening in the can 310, and a gasket 360 interposed between the can 310 and the cap assembly 350.

The electrode assembly 340 may include a first electrode 342 and a second electrode 344, with a separator 346 interposed between the first and second electrodes 342 and 344. The electrode assembly 340 may be wound in a jelly-roll shape. However, the shape of the electrode assembly 340 is not limited thereto and, for example, may be a stack-type shape.

The first electrode 342 may include a first substrate and a first active material layer applied to the first substrate. A first electrode tab 342_T may extend from side of the first electrode 342. For example, the first electrode tab 342_T may extend outward from a first non-coated portion of the first substrate where the first active material layer is not provided. The first electrode tab 342_T may be electrically connected to the cap assembly 350.

The second electrode 344 may include a second substrate and a second active material layer applied to the second substrate. A second electrode tab 344_T may extend from a side of the second electrode 344. For example, the second electrode tab 344_T may extend outward from a second non-coated portion of the second substrate where the second active material layer is not provided. The second electrode tab 344_T may be electrically connected to the can 310. In an example, the first electrode tab 342_T and the second electrode tab 344_T may extend in opposite directions. In another example, the first electrode tab 342_T and the second electrode tab 344_T may extend in the same direction.

The first electrode 342 may function as a positive electrode. In such a configuration, the first substrate may be formed of, for example, an aluminum foil, and the first active material layer may include, for example, a transition metal oxide. The second electrode 344 may function as a negative electrode. In this configuration, the second substrate may be formed of, for example, a copper foil or a nickel foil, and the second active material layer may include, for example, graphite. In another example, the first electrode 342 may function as a negative electrode and the second electrode 344 may function as a positive electrode.

The separator 346 functions to allow the movement of lithium ions while preventing a short circuit between the first electrode 342 and the second electrode 344. The separator 346 may be formed, for example, of a polyethylene film, a polypropylene film, or a polyethylene-polypropylene film.

The electrolyte may include a lithium salt and an organic solvent. The lithium salt may include LiPF6, LiBF4, and the like. The organic solvent may include ethylene carbonate (EC), propylene carbonate (PC), diethyl carbonate (DEC), dimethyl carbonate (DMC), ethyl methyl carbonate (EMC), and the like.

The can 310 may include a circular bottom portion 320 and a side portion 330 extending upward from the bottom portion 320. An upper end of the side portion 330 may be open. In a manufacturing process of the secondary battery 300, the electrode assembly 340 may be accommodated with the electrolyte inside the can 310 by being inserted through an opening of the can 310. The can 310 may be formed of steel, a steel alloy, nickel-plated steel, nickel-plated steel alloy, aluminum, an aluminum alloy, or equivalents thereof.

The cap assembly 350 may be coupled to the side portion 330 of the can 310. A crimping portion 334 and a beading portion 332 may be formed at the upper side of the side portion 330 to fix the cap assembly 350. The beading portion 332 may be formed by bending the side portion 330 inward of the can 310. The beading portion 332 may be a portion on which the cap assembly 350 is seated when assembling the secondary battery. To this end, the beading portion 332 may be bent inward of the can 310 between the cap assembly 350 and the electrode assembly 340. The crimping portion 334 may be formed by bending inward the open end of the side portion 330 after seating the cap assembly 350. The crimping portion 334 may prevent separation of the cap assembly 350. The beading portion 332 spaced apart from the electrode assembly 340 so as not to contact the electrode assembly 340.

A first electrode tab 342_T extending a certain length upward may be welded to the first electrode 342. A second electrode tab 344_T extending a certain length downward may be welded to the second electrode 344. The first electrode tab 342_T may be welded to the cap assembly 350, and the second electrode tab 344_T may be welded to the bottom portion 320 of the can 310. With such an arrangement, the can 310 may operate as the second electrode, and the cap assembly 350 may operate as the first electrode. The first electrode 342, the second electrode 344, and the separator 346 may be wound in the shape of a cylinder and may be accommodated within the can 310.

The cap assembly 350 may include a vent portion 354, an upper cap 352 disposed above the vent portion 354, and a lower cap 356 disposed below the vent portion 354. The cap assembly 350 may further include an insulating member 358 inserted between the vent portion 354 and the lower cap 356 so that portions other than the center region of the vent portion 354 do not contact the lower 356.

A gasket 360 may insulate the cap assembly 350 from the can 310. The gasket 360 may be interposed between the side portion 330 and the cap assembly 350. The gasket 360 may be in contact with at least a portion of the beading portion 332, and the gasket 360 may be in contact with at least a portion of an upper region of the side portion 330 located above the beading portion 332. The gasket 360 may be press-fitted between the cap assembly 350 and the side portion 330. In other words, the gasket 360 may be compressed between the side portion 330 and the cap assembly 350 by a crimping process.

A central portion of the vent portion 354 may contact the lower cap 356, and a portion supported by the insulating member 358 may be spaced from the lower cap 356. The vent portion 354 may have a notch formed therein such that the notch can rupture to discharge gas when pressure inside the secondary battery rises above a certain level.

In another example, the cap assembly 350 may include an upper cap 352, a vent portion 354, a lower cap 356, the insulating member 358, and a sub-plate (not shown). However, the present disclosure is not limited thereto, and various modifications are possible.

The cap assembly 350 may be fixed inside the crimping portion 334 via the gasket 360 so as to seal the can 310.

The upper cap 352 may be positioned at the topmost side of the cap assembly 350. The upper cap 352 may be convexly protrude upward and may include a terminal portion for connection to an external circuit. The upper cap 352 may include an exhaust port for discharging gas around the terminal portion.

The vent portion 354 may be positioned below the upper cap 352. The vent portion 354 may protrude convexly downward, with a protrusion being connected to the lower cap 356. The upper cap 352 may include at least one notch located around the protrusion.

If gas is generated by overcharging or abnormal operation of the secondary battery, the protrusion may be deformed upward by pressure and be separated from the lower cap 356 while the vent portion 354 is broken along the notch. The broken vent portion 354 may release gas to outside of the secondary battery 300, thereby preventing explosion of the secondary battery 300.

The insulating member 358 may be located between the vent portion 354 and the lower cap 356 and insulate the vent portion 354 from the lower cap 356.

The first electrode tab 342_T extending from the electrode assembly 340 may be fixed to the lower cap 356. Thus, the upper cap 352, the vent portion 354, and the lower cap 356 may be electrically connected to the first electrode 342 of the electrode assembly 340.

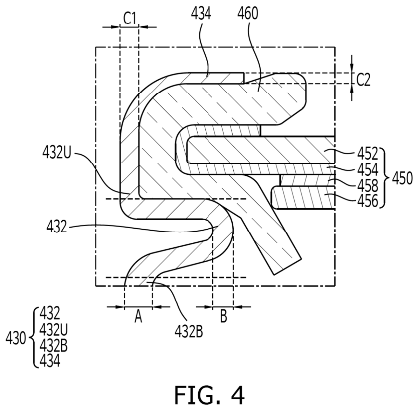

In an embodiment, the thickness of an upper region of the side portion 330 located above the beading portion 332 may be less than the thickness of a lower region of the side portion 330 located below the beading portion 332. Also, the thickness of the upper region of the side portion 330 located above the beading portion 332 may be less than the thickness of the beading portion 332. Specific structures and thicknesses of the side portion 330 will be described below with reference to FIGS. 4 to 9.

FIG. 4 shows a first example of an enlarged view of region R in FIG. 3. FIGS. 4 to 9 illustrate examples of the structure of a side portion 430 of a can, but the present disclosure is not limited to the depicted examples.

The side portion 430 of the can may include a beading portion 432, an upper region (hereinafter, an upper region of the side portion) located above the beading portion 432, and a lower region (hereinafter, a lower region of the side portion) located below the beading portion 432. The upper region 432U of the side portion 430 may include a crimping portion 434 located at an end with the opening. The lower region 432B of the side portion 430 may extend to a portion adjacent to a bottom portion (for example, reference numeral 320 in FIG. 3). The lower region 432B of the side portion 430 may denote a portion located on the side of the electrode assembly 340. The beading portion 432 may be a portion of the side portion 430 that is bent inward of the can. A gasket 460 or a cap assembly 450 may be seated on the beading portion 432.

As shown by the upper dotted line in FIGS. 4 to 9, a boundary between the upper region 432U of the side portion 430 and the beading portion 432 may be defined, as the portion having the greatest curvature due to the inward bending of the upper end of the beading portion 432. As shown by the lower dotted line in FIGS. 4 to 9, a boundary between the lower region 432B of the side portion 430 and the beading portion 432 may be defined, as the portion having the greatest curvature due to the inward bending of the lower end of the beading portion 432.

In an embodiment, the thickness of the upper region 432U of the side portion 430 may decrease from the beading portion 432 toward the open end of the side portion 430. In an embodiment, the thickness B of the beading portion 432 and the thickness A of the lower region 432B of the side portion 430 may each be constant, and the thickness B of the beading portion 432 and the thickness A of the lower region 432B of the side portion 430 may be approximately the same. In the present disclosure, "approximately the same" includes substantially the same.

As illustrated in FIG. 4, the shape in which the thickness of the upper region 432U of the side portion 430 decreases continuously from the beading portion 432 toward the open end of the side portion 430 may be such that the thickness decreases continuously in an upward direction. However, the present disclosure is not limited to this shape. For example, in another embodiment, the thickness of the upper region 432U of the side portion 430 may be formed as a stepped shape to form the differences in thickness.

By configuring the thickness C2 at the open end of the crimping portion 434 to be less than the thickness C1 at the boundary portion between the upper region 432U of the side portion 430 and the beading portion 432, the crimped open end may become uncrimped more easily an event such as thermal runaway occurs, thereby allowing the cap assembly 450 to become uncoupled from the can. And with this configuration, the internal pressure of the secondary battery may be relieved to thereby prevent rupture of and/or discharge of contents through the side surface of the can.

Because the thickness B of the beading portion 432 and the thickness A of the lower region 432B of the side portion 430 are greater than the thicknesses C1, C2 of the upper region 432U of the side portion 430, the bendability of the beading portion 432 is not adversely affected. For example, as the beading portion 432 is sufficiently thick, it may be easily bent inward of the can. Also, because the crimping portion 434 may uncrimp before the beading portion 432 unbends, the separating of the cap assembly 450 to release internal pressure may be facilitated.

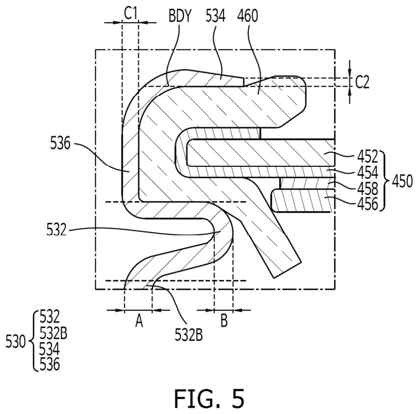

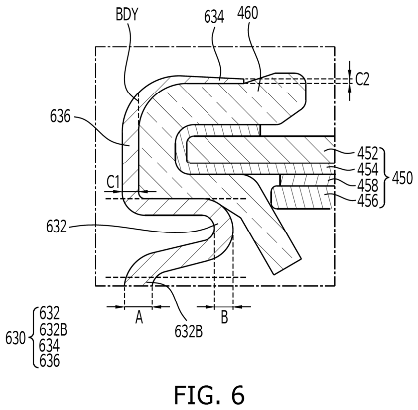

FIG. 5 is a second example of an enlarged view of region R in FIG. 3. FIG. 6 is a third example of an enlarged view of region R in FIG. 3.

The side portion 530 of the can may further include a connecting portion 536 that connects the beading portion 532 and the crimping portion 534. The connecting portion 536 is a region of the side portion 530 of the can that is positioned laterally with respect to the gasket 460 or the cap assembly 450.

In an embodiment, the thickness C2 of the crimping portion 534 may be less than the thickness C1 of the connecting portion 536. For example, as illustrated in FIGS. 5 and 6, the thickness C1 of the connecting portion 536, 636 may be constant, whereas the thickness of the crimping portion 534, 634 may gradually decrease from a boundary BDY between the crimping portion 534, 634 and the connecting portion 536, 636 toward the open end. Referring to FIG. 5, a boundary BDY between the crimping portion 534 and the connecting portion 536 having the above-described thickness range may be located above the gasket 460. In another example, referring to FIG. 6, a boundary BDY between the crimping portion 634 and the connecting portion 636 having the above-described thickness may be located in a lateral direction of the gasket 460. A secondary battery having the can side portion 630 as illustrated in FIG. 6 may more easily uncrimp between the can and the cap assembly 450 than a secondary battery having the side portion 530 of the can illustrated in FIG. 5 because the thickness of the crimping portion 534, 634 or the connecting portion 536, 636 that press-fits and secures the upper side of the gasket 460 or the cap assembly 450 is thinner.

As illustrated in FIGS. 5 and 6, the thickness B of the beading portion 532, 632 and the thickness A of the lower region 532B, 632B of the side portion 530, 630 are constant. Further, the thickness B of the beading portion 532, 632 and the thickness A of the lower region 532B, 632B of the side portion 530, 630 may be approximately the same.

As illustrated in FIGS. 5 and 6, the thickness of the crimping portion 534, 634 may gradually decrease from the boundary BDY between the crimping portion 534, 634 and the connecting portion 536, 636 toward the open end. However, the present disclosure is not limited to this example. For example, in another embodiment, the crimping portion 534, 634 may be a stepped shape to form the differences in thickness.

As described above, because the crimping portion 534, 634 has the least thickness among those of the side portion 530, 630 of the can, uncrimping may be facilitated between the can of the secondary battery and the cap assembly 450. However, the thickness may be adjusted within a lower limit thickness range t such that the sealing strength or durability of the secondary battery is not adversely affected during the initial assembly.

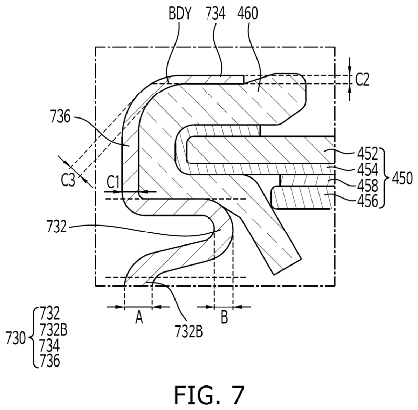

FIG. 7 is a fourth example of an enlarged view of region R in FIG. 3. In FIG. 7, the boundary BDY between the crimping portion 734 and the connecting portion 736 is located above the gasket 460. But the description below with reference to FIG. 7 also applies to other embodiments where the boundary BDY between the crimping portion 734 and the connecting portion 736 is located in a lateral direction of the gasket 460 and/or the cap assembly 450.

Referring to FIG. 7, in an embodiment, the connecting portion 736 may have a decreasing thickness from the boundary with the beading portion 732 toward the boundary BDY with the crimping portion 734. For example, the thickness C3 of the side portion 730 in a region between the boundary BDY of the connecting portion 736 and the crimping portion 734 and a portion of the connecting portion 736 disposed in a lateral direction of the gasket 460 or the cap assembly 450 may be less than the thickness C1 of a portion adjacent to the boundary between the connecting portion 736 and the beading portion 732.

As shown by the upper dotted line in FIG. 7, the boundary between the connecting portion 736 and the beading portion 732 may be the portion having the greatest curvature because of the inward bending of the upper end of the beading portion 732. As illustrated in FIG. 7, the thickness C2 of the crimping portion 734 may be constant. However, the present disclosure is not limited thereto. Although not shown, the thickness C2 of the crimping portion 734 may decrease toward the open end.

As also illustrated in FIG. 7, the thickness B of the beading portion 732 and the thickness A of the lower region 732B of the side portion 730 are constant. And the thickness B of the beading portion 732 and the thickness A of the lower region 732B of the side portion 730 may be approximately the same.

Because the connecting portion 736 has thickness that gradually decreases, uncrimping between the can and the cap assembly 450 is facilitated. Furthermore, because the thickness of the crimping portion 734 is less than the thickness C1 of the connecting portion 736, uncrimping may be further facilitated.

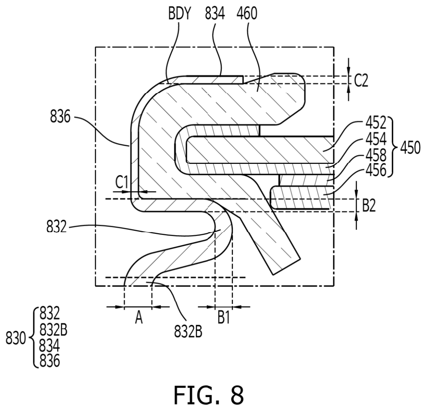

FIG. 8 is a fifth example of an enlarged view of region R in FIG. 3. In FIG. 8, the boundary BDY between the crimping portion 834 and the connecting portion 836 is located above the gasket 460. But the description below with reference to FIG. 8 also applies to embodiments where the boundary BDY between the crimping portion 834 and the connecting portion 836 is located in a lateral direction of the gasket 460 and/or the cap assembly 450.

Referring to FIG. 8, in an embodiment, the thickness of the upper region of the side portion 830 may be constant. That is, the thickness C1 of the connecting portion 836 and the thickness C2 of the crimping portion 834 may be constant. In addition, the thickness C1 of the connecting portion 836 and the thickness C2 of the crimping portion 834 may be approximately the same. Furthermore, the thickness C1 of the connecting portion 836 and the thickness C2 of the crimping portion 834 may be approximately the same as, or as illustrated in FIG. 8, less than, the thickness B2 of the side portion 830 in a region adjacent to the boundary between the beading portion 832 and the connecting portion 836. In an example, the thickness B2 of the side portion 830 in the region adjacent to the boundary between the beading portion 832 and the connecting portion 836 refers to the thickness at the boundary point between the beading portion 832 and the connecting portion 836.

The thicknesses B1, B2 of the beading portion 832 may be less than the thickness A of the lower region 832B of the side portion 830. Also, the thicknesses B1, B2 of the beading portion 832 may be constant. In another example, from the boundary between the beading portion 832 and the lower region 832B of the side portion 830 toward the boundary between the beading portion 832 and the connecting portion 836, the thickness of the beading portion 832 may gradually decrease. For example, the thickness B2 of the side portion 830 in a region adjacent to the boundary between the beading portion 832 and the connecting portion 836 may be less than the thickness B1 of the region of the beading portion 832 that is bent most inward of the can. With such a configuration, in an event such as a thermal runaway, the beading portion 832 may be easily unbent. Consequently, the fixing force on the lower side of the gasket 460 and/or the cap assembly 450 may be weakened, which in turn may allow for uncrimping of the can and the cap assembly 450.

As illustrated in FIG. 8, the thickness of the beading portion 832 gradually decreases from the boundary between the beading portion 832 and the lower region 832B of the side portion 830 toward the boundary between the beading portion 832 and the connecting portion 836. However, the present disclosure is not limited thereto. In other embodiments, a stepped shape may be formed to make the differences in thickness.

In this case, the thickness C1 of the connecting portion 836 and the thickness C2 of the crimping portion 834 may each be constant. Also, the thickness C1 of the connecting portion 836 and the thickness C2 of the crimping portion 834 may be approximately the same. However, the present disclosure is not limited thereto. For example, the thickness C2 of the crimping portion 834 may be less than the thickness C1 of the connecting portion 836. Furthermore, the thickness of the crimping portion 834 may gradually decrease toward the open end, or the thickness of the connecting portion 836 may gradually decrease from the boundary BDY between the connecting portion 836 and the crimping portion 834.

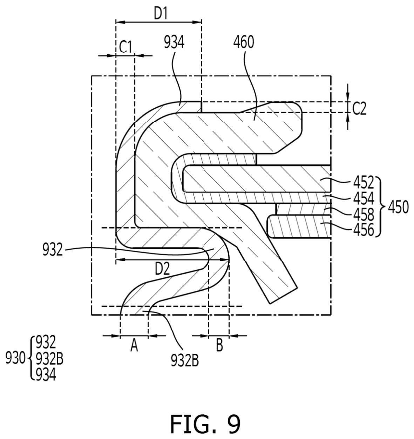

FIG. 9 is a sixth example of an enlarged view of region R in FIG. 3. FIG. 9 is substantially the same as the side portion structure illustrated in FIG. 4, except for a difference in the relative sizes of the depth D1 of the crimping portion 934 bent inward of the can and the depth D2 of the beading portion 932 bent inward of the can.

Referring to FIG. 9, unlike the examples described with reference to FIGS. 4 to 8, the depth D1 at which the crimping portion 934 is bent inward of the can may be less than the depth D2 at which the beading portion 932 is bent inward of the can. In a top view of the secondary battery, the area of the crimping portion 934 disposed above the gasket 460 and/or the cap assembly 450 is less than the area of the beading portion 932. With such a configuration, it may be easier for the can and the cap assembly 450 to become uncrimped.

In some examples of the side portion structures described with reference to FIGS. 4 to 9, the ratio of the thickness of the upper region of the side portion to the thickness of the lower region of the side portion may be 0.3-0.8. If the ratio of the thickness of the upper region of the side portion to the thickness of the lower region of the side portion is less than 0.3, the thickness of the beading portion or the thickness of the upper region of the side portion may become too small, which may result in weak durability or strength at the time of the secondary battery is assembled. If the ratio of the thickness of the upper region of the side portion to the thickness of the lower region of the side portion is greater than 0.8, when an event such as thermal runaway occurs, the discharge of contents and/or the pressure increase toward the side surface may be excessive. In such a case, there is an increased risk of thermal runaway propagation to an adjacent cell in a battery module.

As described above, in some embodiments the upper region of the side portion and/or the beading portion may include be formed in a shape with a thickness that continuously decreases or a stepped shape. However, the thickness of the beading portion or the thickness of the upper region of the side portion may be adjusted to not weaken durability or strength at the time the secondary battery is assembled. For example, a stepped shape may be configured so as not to be positioned laterally with respect to the cap assembly 450, thereby allowing sufficient sealing between the can and the cap assembly 450.

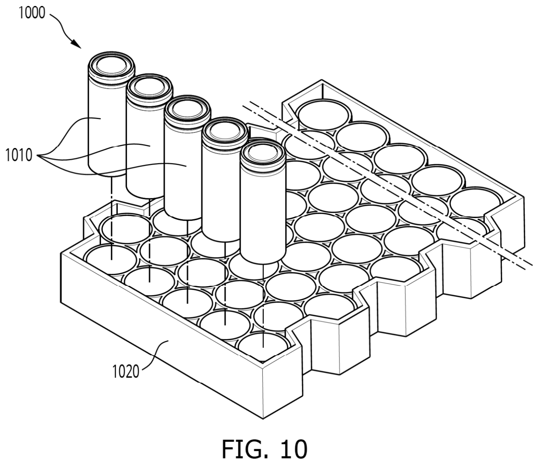

FIG. 10 is a perspective view illustrating a battery module according to an embodiment of the present disclosure.

Referring to FIG. 10, a battery module 1000 according to an embodiment of the present disclosure may include secondary batteries 1010 that are electrically connected and arranged in a horizontal direction, and a housing 1020 that accommodates the plurality of secondary batteries 1010. Each of the plurality of secondary batteries 1010 may be substantially the same as a secondary battery having a can side portion structure as described with reference to FIGS. 3 to 9. That is, by designing the thickness of an upper region of the side portion, located above the beading portion, to be less than the thickness of a lower region of the side portion, located below the beading portion, and by making the thickness of the upper region of the side portion, located above the beading portion, less than the thickness of the beading portion, it may be possible to reduce the risk that the plurality of secondary batteries 1010 becomes a triggered.

A battery pack according to an embodiment may include at least one battery module 1000 described above. Any tray, housing, or electronic connection device included in the battery pack may be adopted as commonly used in the technical field of battery packs.

### Description of some reference symbols

300: secondary battery
310: can
320: bottom portion
330: side portion

## Claims

1. A secondary battery comprising:
a can (310) comprising a bottom portion (320) and a side portion extending from the bottom portion (320);
an electrode assembly (340) accommodated in the can (310);
a cap assembly (350, 450) coupled to the side portion; and
a gasket (360, 460) interposed between the side portion and the cap assembly (350, 450),
wherein the side portion comprises (i) a beading portion bent inward between the cap assembly (350, 450) and the electrode assembly (340) and (ii) a crimping portion bent inward at an open end of the side portion,
wherein a thickness of an upper region (432U) of the side portion above the beading portion is less than a thickness of a lower region (432B) of the side portion below the beading portion, and
wherein the thickness of the upper region (432U) of the side portion above the beading portion is less than a thickness of the beading portion.

2. The secondary battery according to claim 1, wherein the thickness of the upper region (432U) of the side portion is constant.

3. The secondary battery according to claim 1, wherein the thickness of the upper region (432U) of the side portion decreases from the beading portion toward the open end of the side portion.

4. The secondary battery according to any one of the preceding claims, wherein the thickness of the beading portion is less than the thickness of the lower region (432B) of the side portion.

5. The secondary battery according to any one of the preceding claims, wherein the side portion further comprises a connecting portion connecting the beading portion and the crimping portion, and
wherein a thickness of the crimping portion is less than a thickness of the connecting portion.

6. The secondary battery according to claim 5, wherein a boundary between the crimping portion and the connecting portion is positioned above the gasket (360, 460).

7. The secondary battery according to claim 5, wherein a boundary between the crimping portion and the connecting portion is positioned lateral of the gasket (360, 460).

8. The secondary battery according to any one of the claims 5 to 7, wherein the thickness of the connecting portion decreases from a boundary of the connecting portion with the beading portion toward a boundary of the connecting portion with the crimping portion.

9. The secondary battery according to any one of the claims 5 to 8, wherein the thickness of the beading portion decreases toward a boundary between the beading portion and the connecting portion.

10. The secondary battery according to any one of the claims 5 to 9, wherein the thickness of the crimping portion decreases from a boundary between the crimping portion and the connecting portion toward the open end of the side portion.

11. The secondary battery according to any one of the preceding claims, wherein a ratio of the thickness of the upper region (432U) of the side portion to the thickness of the lower region (432B) of the side portion is 0.3-0.8.

12. The secondary battery according to any one of the preceding claims, wherein a length at which the crimping portion is bent inward is less than a length that the beading portion is bent inward.

13. The secondary battery according to any one of the preceding claims, wherein the gasket (360, 460) is in contact with at least a portion of the beading portion, the gasket (360, 460) is in contact with at least a portion of the upper region (432U) of the side portion, and the gasket (360, 460) is press-fitted between the cap assembly (350, 450) and the side portion.

14. The secondary battery according to any one of the preceding claims, wherein the cap assembly (350, 450) comprises:
an upper cap (352) disposed inside the crimping portion;
a vent portion (354) disposed below the upper cap (352); and
a lower cap disposed below the vent portion (354) and electrically connected to the electrode assembly (340).

15. The secondary battery according to claim 14, wherein the electrode assembly (340) comprises a first electrode (342), a second electrode (344), and a separator (346) interposed between the first electrode (342) and the second electrode (344),
wherein the lower is connected to a first electrode tab extending from a first side of the first electrode (342), and
wherein the bottom portion (320) is connected to a second electrode tab extending from a second side of the second electrode (344).
